**Europäisches Patentamt**

**European Patent Office**

**Office européen des brevets**

(11) Veröffentlichungsnummer: **0 387 591**
**A2**

# EUROPÄISCHE PATENTANMELDUNG

(21) Anmeldenummer: **90103754.9**

(22) Anmeldetag: **26.02.90**

(51) Int. Cl.5: **C08F 8/42**

(30) Priorität: **11.03.89 DE 3907991**

(43) Veröffentlichungstag der Anmeldung:
**19.09.90 Patentblatt 90/38**

(84) Benannte Vertragsstaaten:
**BE DE ES FR GB IT SE**

(71) Anmelder: **BASF Aktiengesellschaft**
**Carl-Bosch-Strasse 38**
**D-6700 Ludwigshafen(DE)**

(72) Erfinder: **Filges, Ulrich, Dr.**
**Albert-Einstein-Allee 33**
**D-6703 Limburgerhof(DE)**
Erfinder: **Aydin, Oral, Dr.**
**Sophienstrasse 14**
**D-6800 Mannheim 1(DE)**
Erfinder: **Auchter, Gerhard, Dr.**
**Paray-le-Monial-Strasse 10**
**D-6702 Bad Duerkheim(DE)**

(54) **Silicium enthaltende Polymerisate, die hauptsächlich aus Acrylsäure- und/oder Methacrylsäureestern aufgebaut sind.**

(57) Silicium enthaltende Polymerisate, die aus

a) 40 bis 99,5 Gew.-Teilen wenigstens eines Acrylsäure- oder Methacrylsäuresters eines einwertigen 1 bis 12 C-Atome enthaltenden aliphatischen Alkohols (Bausteine A)

b) 0,5 bis 10 Gew.-Teilen wenigstens eines Acrylsäure- und/oder Methacrylsäureesters eines zweiwertigen, 2 bis 8 C-Atome enthaltenden aliphatischen Alkohols (Bausteine B)

c) 0 bis 30 Gew.-Teilen eines oder mehrerer radikalisch copolymerisierbarer ethylenisch ungesättigter Monomeren (Bausteine C)

d) 0 bis 8 Gew.-Teilen eines oder mehrerer wenigstens eine Hydroxylgruppe enthaltenden Überträgers radikalischer Ketten (Bausteine D)

e) 1 bis 25 Gew.-Teilen wenigstens eines Diisocyanats (Bausteine E) und

f) wirksamen Mengen wenigstens eines Silans der allgemeinen Formel I (Bausteine F)

$$NH_2-R^1-Si(R^2)_{3-m}(R^3)_m \quad (I),$$

in der die Variablen folgende Bedeutung haben:

$m$ 0,1 oder 2

$R^1$ Kohlenwasserstoffkette mit bis zu 10 Kohlenstoffatomen, die durch Sauerstoff oder Stickstoff unterbrochen sein kann,

$R^2$ gleiche oder verschiedene hydrolysierbare Gruppen,

$R^3$ gleiche oder verschiedene $C_1$- bis $C_5$-Alkylgruppen, mit der Maßgabe, daß das Verhältnis, gebildet aus der Molzahl der in Form der Bausteine B und C eingebauten Hydroxylgruppen als Zähler und der Molzahl der eingebauten Bausteine E als Nenner 0,8 bis 1,2 beträgt, aufgebaut sind.

## Silicium enthaltende Polymerisate, die hauptsächlich aus Acrylsäure- und/oder Methacrylsäureestern aufgebaut sind

Die vorliegende Erfindung betrifft Silicium enthaltende Polymerisate, bestehend aus

a) 40 bis 99,5 Gew.-Teilen wenigstens eines Acrylsäure- und/oder Methacrylsäureesters eines einwertigen 1 bis 12 C-Atome enthaltenden aliphatischen Alkohols (Bausteine A)

b) 0,5 bis 10 Gew.-Teilen wenigstens eines Acrylsäure- und/oder Methacrylsäureesters eines zweiwertigen, 2 bis 8 C-Atome enthaltenden aliphatischen Alkohols (Bausteine B)

c) 0 bis 30 Gew.-Teilen eines oder mehrerer radikalisch copolymerisierbarer ethylenisch ungesättigter Monomeren (Bausteine C)

d) 0 bis 8 Gew.-Teilen eines oder mehrerer wenigstens eine Hydroxylgruppe enthaltenden Überträgers radikalischer Ketten (Bausteine D)

e) 1 bis 25 Gew.-Teilen wenigstens eines Diisocyanats (Bausteine E) und

f) wirksamen Mengen wenigstens eines Silans der allgemeinen Formel I (Bausteine F)

$$NH_2-R^1-Si(R^2)_{3-m}(R^3)_m \qquad (I),$$

in der die Variablen folgende Bedeutung haben:

m 0,1 oder 2

$R^1$ Kohlenwasserstoffkette mit bis zu 10 Kohlenstoffatomen, die durch Sauerstoff oder Stickstoff unterbrochen sein kann,

$R^2$ gleiche oder verschiedene hydrolysierbare Gruppen,

$R^3$ gleiche oder verschiedene $C_1$- bis $C_5$-Alkylgruppen, mit der Maßgabe, daß das Verhältnis, gebildet aus der Molzahl der in Form der Bausteine B und C eingebauten Hydroxylgruppen als Zähler und der Molzahl der eingebauten Bausteine E als Nenner 0,8 bis 1,2 beträgt.

Weiterhin betrifft die Erfindung die Herstellung dieser Silicium enthaltenden Polymerisate und ihre Verwendung in durch Luftfeuchtigkeit härtenden Dichtungsmassen.

Aus der EP-A 199 445 sind Silicium enthaltende Polymerisate bekannt, die im wesentlichen aus Acrylsäureestern aufgebaut und durch eine Kondensationsreaktion zwischen Polyacrylaten als Ausgangspolymeren und Verbindungen der allgemeinen Formel I erhältlich sind. Aus der DE-C 2 915 864 sind hauptsächlich aus Acrylsäureestern aufgebaute Polymerisate bekannt, die freie Isocyanatgruppen enthalten. Diese im wesentlichen aus Acrylsäureestern aufgebauten Polymerisate werden als Basis von unter Einwirkung von Luftfeuchtigkeit härtenden Dichtungsmassen empfohlen. Die anwendungstechnischen Eigenschaften dieser im wesentlichen aus Acrylsäureestern aufgebauten Polymerisate lassen jedoch zu wünschen übrig, da sie unter Einwirkung von Luftfeuchtigkeit, insbesondere bei Raumtemperatur, nur relativ langsam aushärten.

Der vorliegenden Erfindung lag daher die Aufgabe zugrunde, dem geschilderten Nachteil mittels besser geeigneten Polymerisaten auf der Basis von Acrylsäure- und/oder Methacrylsäureestern abzuhelfen. Demgemäß wurden die eingangs definierten Polymerisate gefunden.

Als Bausteine A werden mit Vorteil Ester der Acryl- oder Methacrylsäure einpolymerisiert, die sich von 1 bis 8 C-Atome enthaltenden einwertigen Alkoholen wie Methanol, Ethanol, iso-Propanol, n- und iso-Butanol, n-Pentanol, n-Hexanol sowie 2-Ethylhexanol ableiten, wobei die Ester der Acrylsäure bevorzugt sind. Besonders bevorzugte Acrylate A sind Ethylacrylat und n-Butylacrylat. Aus der Reihe der Methacrylate ist das Methylmethacrylat von besonderem Interesse.

Als Bausteine B kommen bevorzugt die Acryl- und Methacrylsäureester von diprimären $C_2$- bis $C_8$-n-Alkanolen in Betracht. Besonders bevorzugte ω-Hydroxyalkylacrylate sowie -methacrylate sind 2-Hydroxyethylacrylat und -methacrylat, 3-Hydroxypropylacrylat und -methacrylat, 4-Hydroxybutylacrylat und -methacrylat sowie 5-Hydroxypentylacrylat und -methacrylat. Vorzugsweise enthalten die erfindungsgemäßen Polymerisate 1 bis 6 Gew.-Teile an Bausteinen B.

Während der Einbau von Monomeren A, B in die erfindungsgemäßen Polymerisate obligatorisch ist, bilden die Monomeren C lediglich Hilfsmonomere. Mögliche Monomere C sind z.B. Acryl- und Methacrylnitril, Vinylester von $C_2$- bis $C_{12}$-n-Alkansäuren wie Vinylacetat und Vinylpropionat, Vinylhalogenide wie Vinylchlorid sowie vinylaromatische Monomere wie Styrol, Vinyltoluol, Chlorstyrol oder tert.-Butylstyrol, wobei Acryl- und Methacrylnitril sowie Vinylacetat bevorzugt sind. Besonders geeignete Hydroxylgruppen enthaltende Überträger D sind z.B. Mercaptoethanol, Mercaptopropanol, Thiophenol oder Thioglycerin, wobei Mercaptoethanol bevorzugt wird. In vorteilhafter Weise enthalten die erfindungsgemäßen Polymerisate 0,1 bis 6, besonders bevorzugt 1 bis 6 Gew.-Teile an Überträgern D.

Als Diisocyanate E können sowohl Alkyl-, Cycloalkyl- als auch Aryldiisocyanate eingesetzt werden. Beispiele für besonders geeignete Diisocyanate E sind 1,6-Diisocyanatohexan, 4,4′-Diisocyanato-dicyclohexylmethan, 3,5,5-Trimethyl-1-isocyanato-3-isocyanatomethylcyclohexan, 2,4-Diisocyanato-toluol, 2,6-Diisocyanatotoluol, 4,4′-Diisocyanatodiphenylmethan oder 1,5-Diisocyanatonaphtalin. Die Diisocyanate E werden in die erfindungsgemäßen Polymerisate in solchen Mengen eingebaut, daß das Verhältnis, gebildet aus der Molzahl der in Form der Bausteine B und C eingebauten Hydroxylgruppen als Zähler und der Molzahl der eingebauten Diisocyanate E als Nenner 0,8 bis 1,2, bevorzugt 0,95 bis 1,05 und bersonders bevorzugt 1,0 beträgt.

Halogene, die Aminogruppe oder wenige C-Atome tragende Alkyloxy-, Alkylthio-, Alkylamino- oder Dialkylaminogruppen zählen zu den bevorzugten hydrolysierbaren Gruppen $R^2$. Bevorzugt eingebaute Silane I sind solche mit m = 0, wie 3-Aminopropyl-trimethoxysilan, 3-Aminopropyl-triethoxysilan und N-(2-Aminoethyl-3-Aminopropyl)-trimethoxysilan. Der Gehalt der erfindungsgemäßen Polymerisate an Silanen I ist abhängig vom Gehalt an Bausteinen E und wird so gewählt, daß das Mölverhältnis, gebildet aus der Molzahl an E als Zähler und der Molzahl der Silane I als Nenner 1 bis 15, bevorzugt 1 bis 8 beträgt.

Die Herstellung der erfindungsgemäßen Polymerisate erfolgt zweckmäßigerweise so, daß man aus den Bausteinen A bis D nach dem an sich bekannten Verfahren der radikalischen Lösungspolymerisation ein Ausgangspolymeres herstellt und dessen Lösung oder Schmelze mit den Diisocyanaten umsetzt. Die Umsetzungstemperatur ist von untergeordneter Bedeutung und beträgt in der Regel 25 bis 150, bevorzugt 100 bis 150 °C. Sie wirkt sich gewöhnlich lediglich auf die Dauer der Umsetzung aus, die je nach Umsetzungstemperatur 2 bis 30 h beträgt. Durch Einrühren der Silane I in Lösungen der erhaltenen Umsetzungsprodukte oder Lösungsmittel-freie Schmelzen derselben, sind die erfindungsgemäßen Polymerisate in Substanz oder in Lösung erhältlich, wobei diese Umsetzung im allgemeinen bereits bei Raumtemperatur innerhalb weniger Minuten erfolgt.

Als Lösungsmittel für die radikalische Lösungspolymerisation sowie für die sich gegebenenfalls anschließenden Umsetzungen in Lösung werden in der Regel Ether wie Tetrahydrofuran oder Dioxan, Ester wie Ethylacetat oder n-Butylacetat, Ketone wie Aceton oder Cyclohexanon, N,N-Dialkylcarbonsäureamide wie N,N-Dimethylformamid, N,N-Dimethylacetamid oder N-Methyl-2-pyrrolidon, Aromaten wie Toluol und Xylol, aliphatische Kohlenwasserstoffe wie Isooctan, chlorierte Kohlenwasserstoffe wie tert.-Butylchlorid oder Weichmacher wie Di-n-butylphthalat verwendet.

Als Radikalstarter kommen insbesondere organische Azoverbindungen oder organische Peroxide wie Azo-bis-(isobutyronitril), 4,4'-Azo-bis-(4-cyanopentan-1-ol), Dibenzoylperoxid oder tert.-Butyl-per-2-ethylhexanoat in Betracht.

Als weitere Hilfsmittel können auch nicht Hydroxylgruppen enthaltende kettenübertragende Substanzen wie aliphatische, aromatische oder alicyclische Mercaptane zugesetzt werden. Die Polymerisationstemperatur beträgt in vorteilhafter Weise 80 bis 150 °C. Üblicherweise wird die Polymerisation in Form eines Zulaufverfahrens durchgeführt, bei dem man einen Teil des Polymerisationsansatzes vorlegt, auf die Polymerisationstemperatur erhitzt und anschließend unter Aufrechterhaltung der Polymerisationstemperatur den Rest des Polymerisationsansatzes in getrennten Zuläufen, von denen einer die Monomeren enthält, kontinuierlich zuführt. Das Zulaufverfahren erstreckt sich in der Regel über einen Zeitraum von 2 bis 24 h. Anschließend wird üblicherweise noch 1 bis 3 h nachpolymerisiert. Zweckmäßigerweise arbeitet man, wie auch bei den sich anschließenden Umsetzungen, in "wasserfreiem" Reaktionsmedium, d.h. bei einem Wassergehalt von weniger als 100 ppm. Mit Vorteil enthält das Reaktionsmedium der an sich wasserfreien Reaktionsteilnehmer geringe Mengen an Trocknungsmitteln wie Orthoameisensäuretrialkylester, z.B. Triethylorthoformiat, oder Tetraalkoxysilane, wie Tetramethoxysilan. Von den so erhältlichen Lösungen der Ausgangspolymeren kann das Lösungsmittel je nach Bedarf, beispielsweise durch Destillation im Vakuum, teilweise oder vollständig abgetrennt werden. Der K-Wert der dabei anfallenden Ausgangspolymeren in Tetrahydrofuran (THF) beträgt vorzugsweise 8 bis 70, besonders bevorzugt 14 bis 40. Der K-Wert ist eine relative Viskositätszahl, die in Analogie zur DIN 53 726 bei 25 °C bestimmt wird. Er enthält die Fließgeschwindigkeit einer Mischung aus 0,01 g Polymerem pro mol THF, relativ zur Fließgeschwindigkeit von reinem THF und charakterisiert den mittleren Polymerisationsgrad des Polymeren.

Die Umsetzung des erhaltenen Ausgangspolymeren mit den Bausteinen E wird zweckmäßigerweise so vorgenommen, daß man die bei der radikalischen Lösungspolymerisation anfallende Lösung der Ausgangspolymeren mit den Diisocyanaten, die gegebenenfalls in einer geringen Menge eines für die Lösungspolymerisation geeigneten Lösungsmittels gelöst werden, versetzt und anschließend erhitzt. Durch Zugabe von metallorganischen Verbindungen wie Di-n-butyl-zinn-di-n-dodecanat oder Aminen wie 1,8-Diazobicyclo-[5,4,0] undecen-7, N,N-Dimethylcyclohexylamin sowie N,N-Dimethylbenzylamin kann die Umsetzung beschleunigt werden. Nach beendeter Umsetzung werden die erfindungsgemäßen Polymerisate durch anschließendes Einrühren der Silane I, in der Regel bei Zimmertemperatur, vorzugsweise in Lösung erhalten.

Lösungsmittel-freie erfindungsgemäße Polymerisate sind beispielsweise durch destillatives Abtrennen des Lösungsmittels zugänglich.

Die erfindungsgemäßen Polymerisate sind durch Einwirkung von Luftfeuchtigkeit bei Zimmertemperatur relativ rasch härtbar und somit sowohl in Lösung als auch in Substanz zur Herstellung von an der Luftfeuchtigkeit härtenden Dichtungsmassen geeignet. Dabei können als Hilfsmittel u.a. äußere Weichmacher, inerte Füllstoffe, Verdickungsmittel, Farbstoffe, Lösungsmittel, Mittel zur Erhöhung der Alterungsbeständigkeit oder Wirkstoffe, die die Aushärtung durch Einwirkung von Luftfeuchtigkeit beschleunigen, zugegeben werden. Die Mengen an Zusatzstoffen sind dem Fachmann geläufig und werden in Abhängigkeit von den gewünschten Eigenschaften der besonderen Masse ausgewählt und zweckmäßigerweise in die Lösungen oder Schmelzen der erfindungsgemäßen Polymerisate eingerührt. Bezogen auf das Gesamtgewicht der Zubereitung beträgt der Anteil der erfindungsgemäßen Silicium enthaltenden Polymerisate in der Regel 30 bis 100, bevorzugt 50 bis 100 Gew.%, während der Anteil der inerten Füllstoffe 0 bis 50 Gew.% beträgt.

Geeignete äußere Weichmacher sind beispielsweise Phthalsäureester wie Diethylphthalat, Di-n-butylphthalat, Di-isoheptylphthalat oder Di-(2-ethylhexyl)-phthalat, Adipinsäureester wie Di-2-ethylhexyladipat oder Di-iso-octyladipat, Sebacinsäureester wie Di-(2-ethylhexyl)-sebacinat, Phosphorsäureester wie Tri-n-butylphosphat, Tri-isobutylphosphat oder Tri-($\beta$-chlorethyl)-phosphat sowie chlorierte Kohlenwasserstoffe.

Als inerte Füllstoffe kommen insbesondere Aluminiumsilicate, Quarz, gefällte oder pyrogene Kieselsäure, die hydrophobiert sein kann, Leicht- und Schwerspat, Talcum, Dolomit, Calciumcarbonat sowie farbgebende Pigmente wie Titanweiß, Bleiweiß, Chromgelb, Mennige, Zinkgelb oder Ruß in Betracht.

Lösungsmittel wie aromatische Kohlenwasserstoffe, z.B. Toluol oder Xylole, wird man in der Regel zur Erniedrigung der Viskosität einarbeiten.

Die bereits bei Zimmertemperatur relativ rasch fortschreitende Aushärtung der erfindungsgemäßen Polymerisate kann je nach Bedarf durch Zugabe entsprechender Wirkstoffe wie Di-n-butyl-zinn-diacetat zusätzlich beschleunigt werden. Die Dichtungsmassen können in Form eines Einkomponentensystems hergestellt werden, bei dem alle Bestandteile vermischt und anschließend in einem abgedichteten Behälter gelagert werden. Man kann sie aber auch in Form eines Zweikomponentensystems verwenden, bei dem das mit Diisocyanat umgesetzte Ausgangspolymere und die Hilfsmittel zu einer Komponente vermischt werden, in die vor Anwendung die Silane I als zweite Komponente eingerührt werden. Im Falle eines Einkomponentensystems muß besonders sorgfältig auf den Ausschluß von Wasser geachtet werden, da sonst ein vorzeitiges Aushärten der Dichtungsmasse erfolgt. Im Falle eines Zweikomponentensystems ist die Anwesenheit geringer Spuren Wasser im Ausgangspolymeren oder in den Hilfsmitteln weniger kritisch, was sowohl die Verarbeitung der Ausgangskomponenten als auch die Lagerung der Dichtungsmasse erleichtert. Die erfindungsgemäßen Dichtungsmassen zeichnen sich durch besonders gute Adhäsion auf Glas, Aluminium und Keramik aus. Sie sind ferner mit Haushaltsfarbe überstreichbar.

Beispiele B1 bis B5 und Vergleichsbeispiele V1 und V2

Verschiedene Silicium enthaltende Polymerisate, die hauptsächlich aus Acrylsäure- und/oder Methacrylsäureestern aufgebaut sind

B1

300 g Toluol wurden auf die Polymerisationstemperatur von 100°C erhitzt und anschließend unter Aufrechterhaltung der Polymerisationstemperatur innerhalb von 3 h mit einem Gemisch aus 600 g n-Butylacrylat, 20,4 g (176 mmol) Hydroxyethylacrylat sowie 13,2 g (169 mmol) Mercaptoethanol und parallel dazu im Laufe von 3,5 h mit einer Lösung von 2 g 4,4'-Azo-bis-(isobutyronitril) in 100 g Toluol versetzt. Daran anschließend wurden auf einmal 3 g tert.-Butyl-per-2-ethylhexanoat zugegeben und 1,5 h bei 140°C nachpolymerisiert. Der K-Wert (in THF) der in Lösung erhaltenen Ausgangspolymeren betrug 14,9.

Zu der erhaltenen Lösung der Ausgangspolymeren wurden 58 g (345 mmol) 1,6-Diisocyanatohexan sowie 1 g Di-n-butyl-zinn-di-n-dodecanat zugegeben, die resultierende Mischung 12 h auf 130°C erhitzt und anschließend abgekühlt. Die entstandene Lösung wies einen Isocyanatgehalt von 1,3 auf (der Isocyanatgehalt der Lösung gibt den Gewichtsanteil in wieder, mit dem die in der Lösung noch vorhandenen Isocyanatgruppen NCO zum Gesamtgewicht der Lösung beitragen; seine Bestimmung wurde nach DIN 16 945 vorgenommen). Danach wurden in die erhaltene Lösung bei Raumtemperatur 14 g (78 mmol) 3-Aminopropyltrimethoxysilan eingerührt. Von der erhaltenen Masse wurde eine Probe in 1,5 mm Schichtdicke auf eine Glasplatte aufgetragen und 3 Wochen Normalklima (23°C, 50 % r. F.) ausgesetzt. Es wurde ein transparenter elastischer Film mit einer Reißfestigkeit von 0,2 N/mm² und einer Reißdehnung (beide nach DIN 53 504, bei einer Vorschubgeschwindigkeit von 100 mm/min und unter Verwendung des Probekörpers S3A) von 93 % erhalten. Bereits nach 12 h zeigte der gebildete Film kein Fließverhalten mehr.

V1

Eine Lösung aus 300 g Toluol und 1 g Triethylorthoformiat wurde auf die Polymerisationstemperatur von 110°C erhitzt und anschließend unter Aufrechterhaltung der polymerisationstemperatur im Laufe von 2,5 h mit 600 g n-Butylacrylat und parallel dazu im Laufe von 3,5 h mit einer Lösung von 2 g Azo-bis-(isobutyronitril) in 100 g Toluol versetzt. Danach wurde noch 24 h bei 110°C nachpolymerisiert. Der K-Wert (in THF) des in Lösung erhaltenen Ausgangspolymeren betrug 33,2. Die erhaltene Lösung des Ausgangspolymeren wurde mit 14 g (78 mmol) 3-Aminopropyl-trimethoxysilan 4 h auf 140°C erhitzt. Danach wurde eine Probe der erhaltenen Masse in 1,5 mm Schichtdicke auf eine Glasplatte aufgetragen und Normalklima ausgesetzt. Auch nach 96 h zeigte der gebildete Film noch Fließverhalten.

B2

Wie B1, jedoch mit folgenden Unterschieden: Die Vorlage wurde innerhalb von 2 h 45 min mit einem Gemisch aus 640 g Ethylacrylat, 26 g (180 mmol) 4-Hydroxybutylacrylat sowie 12 g (154 mmol) Mercaptoethanol und parallel dazu im Laufe von 3 h 15 min mit einer Lösung von 3 g 4,4´-Azo-bis-(isobutyronitril) in 100 g Toluol versetzt. Der K-Wert (in THF) des in Lösung erhaltenen Ausgangspolymeren betrug 17,6. Zur Lösung des Ausgangspolymeren wurden neben 1 g Di-n-butyl-zinn-di-n-dodecanat als Diisocyanat 74,2 g (334 mmol) 3,5,5-Trimethyl-1-isocyanato-3-isocyanatomethylcyclohexan zugegeben und die resultierende Mischung nur 10 h erhitzt. Die entstandene Lösung wies einen Isocyanatgehalt von 1,2 auf.

In die erhaltene Lösung wurden als Silan I 20 g (90 mmol) 3-Aminopropyltriethoxysilan eingerührt. Die Reißfestigkeit betrug 0,3 N/mm² und die Reißdehnung lag bei 110 %.

B3

Wie B1, jedoch mit folgenden Unterschieden: Die Vorlage enthielt neben 300 g Toluol zusätzlich 1 g Triethylorthoformiat, die Polymerisationstemperatur betrug 105°C, die Vorlage wurde mit einem Gemisch aus 500 g Ethylacrylat, 100 g Acrylnitril, 30 g (231 mmol) 3-Hydroxypropylacrylat und 20 g (256 mmol) Mercaptoethanol versetzt, die dazu parallel innerhalb von 3 h 15 min zugeführte Initiatorlösung enthielt 3 g (12 mmol) 4,4´-Azo-bis-(4-cyanopentan-1-ol) in einem Gemisch aus 90 g Toluol und 10 g Tetrahydrofuran, die Nachpolymerisation dauerte 1 h, der K-Wert (in THF) des in Lösung erhaltenen Ausgangspolymeren betrug 36. Zur Lösung des Ausgangspolymeren wurden neben 1 g Di-n-butyl-zinn-di-n-dodecanat als Diisocyanat 113,6 g (511 mmol) 3,5,5-Trimethyl-1-isocyanato-3-isocyanatomethylcyclohexan zugegeben und die resultierende Mischung nur 10 h erhitzt. Die entstandene Lösung wies einen Isocyanatgehalt von 1,8 auf. In die erhaltene Lösung wurden als Silan I 25 g (112 mmol) N-(2-Aminoethyl-3-aminopropyl)-trimethoxysilan eingerührt. Die Reißfestigkeit betrug 0,4 N/mm² und die Reißdehnung lag bei 160 %.

B4

Wie B1, jedoch mit folgenden Unterschieden: Die Vorlage enthielt neben 300 g Toluol zusätzlich 1 g Triethylorthioformiat, die Vorlage wurde innerhalb von 2,5 h mit einem Gemisch aus 450 g n-Butylacrylat, 150 g Vinylacetat, 20 g (172 mmol) 2-Hydroxyethylacrylat und 15 g (192 mmol) Mercaptoethanol sowie parallel dazu im Laufe von 3 h mit einer Lösung von 4 g Azo-bis-(isobutyronitril) in 100 g Toluol versetzt. Ohne weitere Initiatorzugabe wurde 1 h bei 110°C nachpolymerisiert. Der K-Wert (in THF) des in Lösung erhaltenen Ausgangspolymeren betrug 21,4. Zur Lösung des Ausgangspolymeren wurden neben 1 g Di-n-butyl-zinn-di-n-dodecanat als Diisocyanat 63,4 g (364 mmol) 2,6-Diisocyanatotoluol zugegeben und die resultierende Mischung nur 10 h erhitzt. Die entstandene Lösung wies einen Isocyanatgehalt von 1,4 auf. In die erhaltene Lösung wurden 15 g (84 mmol) 3-Aminopropyl-trimethoxysilan eingerührt. Die Reißfestigkeit betrug 0,3 N/mm² und die Reißfestigkeit lag bei 121 %.

B5

Wie B1, jedoch mit folgenden Unterschieden: Die Vorlage wurde innerhalb von 2,5 h mit einem Gemisch aus 980 g Ethylacrylat, 10 g (86 mmol) 2-Hydroxyethylacrylat sowie 10 g (128 mmol) Mercaptoethanol und parallel dazu innerhalb von 3 h mit einer Lösung von 4 g Azo-bis-(isobutyronitril) in 100 g Toluol versetzt. Daran anschließend wurden 5 g tert.-Butyl-per-2-ethylhexanoat zugegeben und 1 h bei 130°C nachpolymerisiert. Der K-Wert (in THF) des in Lösung erhaltenen Ausgangspolymeren betrug 24. Zu der Lösung des Ausgangspolymeren wurden neben 1 g Di-n-butyl-zinn-di-n-dodecanat 47,6 g (214 mmol) 3,5,5-Trimethyl-1-isocyanato-3-isocyanatomethylcyclohexan zugegeben und die resultierende Mischung nur 10 h erhitzt. Die entstandene Lösung wies einen Isocyanatgehalt von 0,6 auf. In die erhaltene Lösung wurden 38 g (214 mmol) 3-Aminopropyl-trimethoxysilan eingerührt. Die Reißfestigkeit betrug 0,25 N/mm² und die Reißdehnung lag bei 98 %.


V2


Gemäß Beispiel 1 aus der DE-C 2 915 864 wurden 100 g n-Butylacrylat, 3,4 g 2-Hydroxyethylacrylat, 2,2 g Mercaptoethanol und 10 g eines Gemisches aus 2,4- und 2,6-Diisocyanatotoluol zu einem Lösungsmittel-freien Polymerisat umgesetzt.

60 g des erhaltenen Lösungsmittel-freien Polymerisats wurden in 40 g Toluol gelöst. Anschließend wurden bei Zimmertemperatur in voneinander unabhängigen Versuchen a) bis b) in jeweils 20 g der erhaltenen Lösung

a) 1,07 g 3-Aminopropyl-trimethoxysilan

b) 0,30 g 3-Aminopropyl-trimethoxysilan und

c) 0 g 3-Aminopropyl-trimethoxysilan eingerührt und eine Probe der jeweils erhaltenen Masse in 1,5 mm Schichtdicke auf eine Glasplatte aufgetragen und Normalklima ausgesetzt.

Nach folgenden Zeiten wiesen die verschiedenen Proben eine geschlossene Oberflächenhaut auf:

a) 15 min

b) 2 h

c) 12 h.


**Ansprüche**

1. Silicium enthaltende Polymerisate, bestehend aus

a) 40 bis 99,5 Gew.-Teilen wenigstens eines Acrylsäure- und/oder Methacrylsäuresters eines einwertigen 1 bis 12 C-Atome enthaltenden aliphatischen Alkohols (Bausteine A)

b) 0,5 bis 10 Gew.-Teilen wenigstens eines Acrylsäure- und/oder Methacrylsäuresters eines zweiwertigen, 2 bis 8 C-Atome enthaltenden aliphatischen Alkohols (Bausteine B)

c) 0 bis 30 Gew.-Teilen eines oder mehrerer radikalisch copolymerisierbarer ethylenisch ungesättigter Monomeren (Bausteine C)

d) 0 bis 8 Gew.-Teilen eines oder mehrerer wenigstens eine Hydroxylgruppe enthaltenden Überträgers radikalischer Ketten (Bausteine D)

e) 1 bis 25 Gew.-Teilen wenigstens eines Diisocyanats (Bausteine E) und

f) wirksamen Mengen wenigstens eines Silans der allgemeinen Formel I (Bausteine F)

$NH_2-R^1-Si(R^2)_{3-m}(R^3)_m$        (I)

in der die Variablen folgende Bedeutung haben:
m 0,1 oder 2
$R^1$ Kohlenwasserstoffkette mit bis zu 10 Kohlenstoffatomen, die durch Sauerstoff oder Stickstoff unterbrochen sein kann,
$R^2$ gleiche oder verschiedene hydrolysierbare Gruppen,
$R^3$ gleiche oder verschiedene $C_1$- bis $C_5$-Alkylgruppen,
mit der Maßgabe, daß das Verhältnis, gebildet aus der Molzahl der in Form der Bausteine B und C eingebauten Hydroxylgruppen als Zähler und der Molzahl der eingebauten Bausteine E als Nenner 0,8 bis 1,2 beträgt.

2. Verfahren zur Herstellung von Polymerisaten gemäß Anspruch 1, dadurch gekennzeichnet, daß man aus den Bausteinen A bis D nach dem an sich bekannten Verfahren der radikalischen Lösungspolymerisation ein Ausgangspolymeres herstellt, dessen Lösung oder Schmelze mit den Bausteinen E umsetzt und in eine Lösung oder Schmelze des entstandenen Umsetzungsproduktes wirksame Mengen wenigstens eines Silans I einrührt. 3. Verwendung der Polymerisate gemäß Anspruch 1 in durch Einwirkung von Luftfeuchtigkeit härtenden Dichtungsmassen.


Patentansprüche für folgenden Vertragsstaat: ES

1. Verfahren zur Herstellung von Silicium enthaltenden Polymerisaten, dadurch gekennzeichnet, daß man aus einem Monomerengemisch, bestehend aus

a) 40 bis 99,5 Gew.-Teilen wenigstens eines Acrylsäure- und/oder Methacrylsäuresters eines einwertigen 1 bis 12 C-Atome enthaltenden aliphatischen Alkohols (Bausteine A)

b) 0,5 bis 10 Gew.-Teilen wenigstens eines Acrylsäure - und/oder Methacrylsäureesters eines zweiwertigen, 2 bis 8 C-Atome enthaltenden aliphatischen Alkohols (Bausteine B)

c) 0 bis 30 Gew.-Teilen eines oder mehrerer radikalisch copolymerisierbarer ethylenisch ungesättigter Monomeren (Bausteine C) und

d) 0 bis 8 Gew.-Teilen eines oder mehrerer wenigstens eine Hydroxylgruppe enthaltenden Überträgers radikalischer Ketten (Bausteine D) durch radikalische Lösungspolymerisation ein Ausgangspolymeres herstellt, dessen Lösung oder Schmelze mit 1 bis 25 Gew.-%-Teilen, bezogen auf die Gesamtmenge der Bausteine A bis F, wenigstens eines Diisocyanats (Baustein E) umsetzt und in eine Lösung oder Schmelze des entstandenen Umsetzungsproduktes wirksame Mengen wenigstens eines Silans der allgemeinen Formel I (Bausteine F)

$NH_2-R^1-Si(R^2)_{3-m}(R^3)_m$        (I)

in der die Variablen folgende Bedeutung haben:

m 0,1 oder 2

$R^1$ Kohlenwasserstoffkette mit bis zu 10 Kohlenstoffatomen, die durch Sauerstoff oder Stickstoff unterbrochen sein kann,

$R^2$ gleiche oder verschiedene hydrolysierbare Gruppen,

$R^3$ gleiche oder verschiedene $C_1$- bis $C_5$-Alkylgruppen,

einrührt,

mit der Maßgabe, daß das Verhältnis, gebildet aus der Molzahl der in Form der Bausteine B und C eingebauten Hydroxylgruppen als Zähler und der Molzahl der eingebauten Bausteine E als Nenner 0,8 bis 1,2 beträgt.

2. Verwendung der nach einem Verfahren gemäß Anspruch 1 erhaltenen Polymerisate in durch Einwirkung von Luftfeuchtigkeit härtenden Dichtungsmassen.